# EUROPEAN PATENT APPLICATION

(11) **EP 4 749 479 A1**
(43) Date of publication of application: **27.05.2026**
(21) Application number: 24842187.7
(22) Date of filing: 28.06.2024
(51) Int. Cl.: G06F 16/9032

(54) **INFORMATION DISPLAY METHOD AND APPARATUS, AND DEVICE AND STORAGE MEDIUM**

(30) Priority: 17.07.2023 CN 202310876956
(71) Applicant: BEIJING YOUZHUJU NETWORK TECHNOLOGY CO. LTD., Beijing 101299 (CN)
(72) Inventor: LIN, Jing, Beijing 100028 (CN); PENG, Zheng, Beijing 100028 (CN); CHEN, Shaolong, Beijing 100028 (CN); LIU, Wenjing, Beijing 100028 (CN); ZHOU, Duanliang, Beijing 100028 (CN); CAI, Shengan, Beijing 100028 (CN); XUE, Hongtao, Beijing 100028 (CN); ZHU, Guorong, Beijing 100028 (CN); WU, Chao, Beijing 100028 (CN); YAO, Conghai, Beijing 100028 (CN); XU, Binghua, Beijing 100028 (CN); CHEN, Runyu, Beijing 100028 (CN); LEI, Da, Beijing 100028 (CN); LUO, Xiangnan, Beijing 100028 (CN); CAO, Yamin, Beijing 100028 (CN); YE, Siyi, Beijing 100028 (CN); XU, Qinglin, Beijing 100028 (CN); RU, Long, Beijing 100028 (CN); LIU, Cong, Beijing 100028 (CN); XIAO, Xiang, Beijing 100028 (CN); LI, Wenhao, Beijing 100028 (CN); WANG, Jie, Beijing 100028 (CN)
(74) Representative: Isarpatent
(86) International application number: PCT/CN2024/102729
(87) International publication number: WO 2025/016191

(57) **Abstract**

The embodiments of the disclosure provides a method, an apparatus, a device, and a storage medium for displaying information, and the method including: displaying an information search interface, where a first search box is displayed in the information search interface; and displaying a first recommended search display area in the information search interface in response to first search text information input to the first search box, where first object attribute information of at least one first recommended search object corresponding to the first search text information is displayed in the first recommended search display area, and the first object attribute information of each first recommended search object includes a plurality of different types of attribute information of the first recommended search object. Since a plurality of different types of attribute information can be displayed, the user can quickly confirm the search object, thereby improving the information obtaining efficiency.

## Description

This application claims priority to Chinese Patent Application No. 2023108769567, filed on Jul. 17, 2023, and entitled "METHOD, APPARATUS, DEVICE, AND STORAGE MEDIUM FOR DISPLAYING INFORMATION", the entirety of which is incorporated herein by reference.

### FIELD

The embodiment of the present disclosure relates to the field of Internet technology and, in particular to a method, an apparatus, a device, and a storage medium for displaying information.

### BACKGROUND

With the development of Internet technologies, more and more merchants choose to post commodities on an Internet platform. The consumer may browse the commodity posted by the merchant through the Internet platform. When a merchant posts a commodity, the SPU (Standard Product Unit) information corresponding to the commodity needs to be obtained, where the SPU information includes a plurality of standard product information corresponding to the commodity, for example, a brand of the commodity, a model of the commodity, and the like.

Currently, a plurality of standard product information input boxes are displayed in a product post interface; for example, a brand input box, a model input box, an origin input box, and the like. The merchant inputs corresponding standard product information in each input box, and only after a plurality of the standard product information has been filled in, the merchant can obtain the SPU information corresponding to the commodity.

However, the inventor found the following technical problem: when posting the commodity, the merchant needs to manually input the standard product information, so that when the standard product information of the commodity is large, the time required for manually inputting the standard product information is long, and the efficiency of obtaining the SPU information corresponding to the commodity is poor.

### SUMMARY

The embodiments of the present disclosure provide a method, an apparatus, a device, and a storage medium for displaying information, which can improve the information obtaining efficiency.

According to a first aspect, an embodiment of the present disclosure provides a method for displaying information, including: displaying an information search interface, where a first search box is displayed in the information search interface; and displaying a first recommended search display area in the information search interface in response to first search text information input to the first search box, where first object attribute information of at least one first recommended search object corresponding to the first search text information is displayed in the first recommended search display area, and the first object attribute information of each first recommended search object includes a plurality of different types of attribute information of the first recommended search object.

According to a second aspect, an embodiment of the present disclosure provides an apparatus for displaying information, including: a displaying module configured to display an information search interface, where a first search box is displayed in the information search interface; and a presenting module configured to display a first recommended search display area in the information search interface in response to first search text information input to the first search box, where first object attribute information of at least one first recommended search object corresponding to the first search text information is displayed in the first recommended search display area, and the first object attribute information of each first recommended search object includes a plurality of different types of attribute information of the first recommended search object.

According to a third aspect, an embodiment of the present disclosure provides an electronic device, including: a processor, and a memory communicatively connected to the processor; the memory storing computer-executable instructions; the processor executes the computer-executable instructions stored in the memory to implement the method for displaying information according to the first aspect.

According to a fourth aspect, an embodiment of the present disclosure provides a computer-readable storage medium storing computer-executable instructions that, when executed by a processor, implement the method for displaying information according to the first aspect.

According to a fifth aspect, an embodiment of the present disclosure provides a computer program product including a computer program that, when executed by a processor, implements the method for displaying information according to the first aspect.

### BRIEF DESCRIPTION OF DRAWINGS

In order to more clearly illustrate the technical solutions in the embodiments of the present disclosure, the accompanying drawings to be used in the description of the embodiments will be briefly introduced below, it is obvious that the accompanying drawings in the following description are some embodiments of the present disclosure, and for those skilled in the art, other accompanying drawings may be obtained according to these drawings without creative labor.
FIG. 1 is a schematic diagram of an application scenario of a method for displaying information according to an embodiment of the present disclosure;
FIG. 2 is a flowchart of a method for displaying information according to an embodiment of the present disclosure;
FIG. 3 is a schematic diagram of an information search interface according to an embodiment of the present disclosure;
FIG. 4 is a schematic diagram of a first object control according to an embodiment of the present disclosure;
FIG. 5 is a flowchart of another method for displaying information according to an embodiment of the present disclosure;
FIG. 6 is a schematic diagram of an information input interface according to an embodiment of the present disclosure;
FIG. 7 is a schematic diagram of another information search interface according to an embodiment of the present disclosure;
FIG. 8 is a flowchart of another method for displaying information according to an embodiment of the present disclosure;
FIG. 9 is a schematic diagram of a method for switching to an information input interface according to an embodiment of the present disclosure;
FIG. 10 is a flowchart of another method for displaying information according to an embodiment of the present disclosure;
FIG. 11 is a schematic diagram of another information input interface according to an embodiment of the present disclosure;
FIG. 12 is a structural block diagram of an apparatus for displaying information according to an embodiment of the present disclosure;
FIG. 13 is a schematic diagram of a hardware structure of an electronic device according to an embodiment of the present disclosure.

### DETAILED DESCRIPTION

In order to make the purposes, technical solutions and advantages of the embodiments of the present disclosure clearer, the technical solutions in the embodiments of the present disclosure will be clearly and completely described below with reference to the accompanying drawings in the embodiments of the present disclosure, and it is clear that the described embodiments are a part of the embodiments of the present disclosure, and not all of the embodiments. Based on the embodiments in the present disclosure, all other embodiments obtained by those of ordinary skill in the art without creative efforts shall fall within the scope of protection of the present disclosure.

It should be noted that the user information (including, but not limited to, user device information, user personal information, etc.) and data (including, but not limited to, data for analysis, stored data, displayed data, etc.) involved in the present application are information and data that are authorized by the user or are sufficiently authorized by all parties, the collection, use, and processing of the related data need to comply with relevant legal regulations and standards, and a corresponding operation portal is provided for the user to select authorization or rejection.

With the development of Internet technologies, more and more merchants choose to post commodities on an Internet platform. The consumer may browse the commodity posted by the merchant through the Internet platform. When a merchant posts a commodity, the SPU (Standard Product Unit) information corresponding to the commodity needs to be obtained, where the SPU information includes a plurality of standard product information corresponding to the commodity, for example, a brand of the commodity, a model of the commodity, and the like.

Currently, a plurality of standard product information input boxes are displayed in a product post interface; for example, a brand input box, a model input box, an origin input box, and the like. The merchant inputs corresponding standard product information in each input box, and only after a plurality of the standard product information has been filled in, the merchant can obtain the SPU information corresponding to the commodity. However, when posting the commodity, the merchant needs to manually input the standard product information, so that when the standard product information of the commodity is large, the time required for manually inputting the standard product information is long, and the efficiency of obtaining the SPU information corresponding to the commodity is poor.

Therefore, how to quickly obtain SPU information of a commodity becomes a technical problem to be resolved currently.

In order to solve the above problem, the present embodiment provides the following technical concept: firstly, displaying an information search interface, where a first search box is displayed in the information search interface; then, for first search text information input to the first search box, displaying a first recommended search display area in the information search interface; where first object attribute information of at least one first recommended search object corresponding to the first search text information is displayed in the first recommended search display area, and the first object attribute information of each first recommended search object includes a plurality of different types of attribute information of the first recommended search object.

When the first search text information is input, the first object attribute information of the at least one first recommended search object may be displayed, the first object attribute information of each first recommended search object includes a plurality of different types of attribute information of the first recommended search object, and the information of the first recommended search object that may be displayed is relatively large, thereby facilitating the user to quickly confirm the search object from the at least one first recommended search object, thereby improving the information obtaining efficiency.

The following describes an application scenario of an embodiment of the present disclosure.

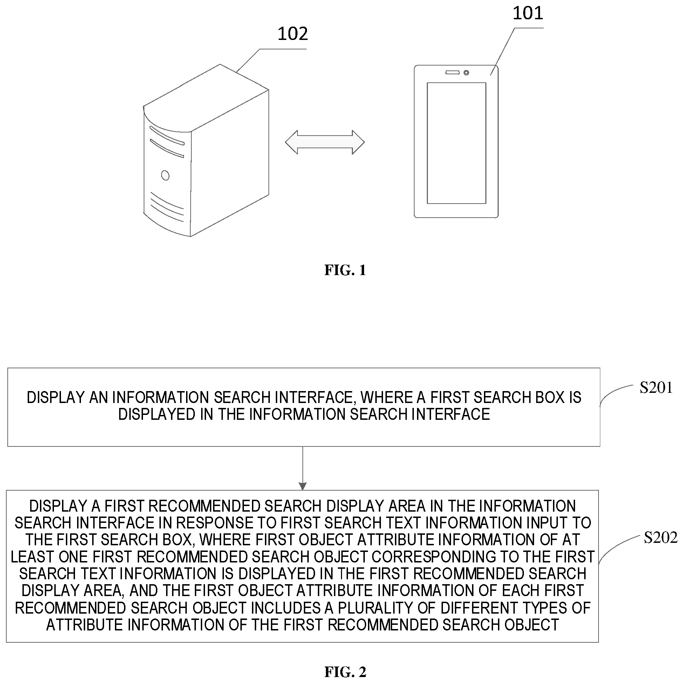

The method for displaying information provided by the embodiment of the present disclosure can be applied to application scenarios for posting various types of SPU objects. FIG. 1 is a schematic diagram of an application scenario of a method for displaying information according to an embodiment of the present disclosure. As shown in FIG. 1, there can be a wired or wireless connection between the server 102 and the terminal 101. For example, the first object attribute information may be SPU information. Correspondingly, the terminal 101 displays the SPU information of the at least one recommended search object, where the SPU information may include a plurality of different types of attribute information of the recommended search object. The terminal 101 obtains SPU information of a to-be-posted object therefrom and sends a posting request of the object to the server 102, the posting request including the SPU information of the object. The server 102 receives the posting request of the object, and posts the SPU object on the Internet platform according to the SPU information of the object. At this time, the consumer may browse the SPU object posted by the merchant through the Internet platform. The method for displaying information provided by the embodiments of the present disclosure will be described in detail below by using detailed embodiments.

Referring to FIG. 2, FIG. 2 is a flowchart of a method for displaying information according to an embodiment of the present disclosure. The present embodiment is described by using an example in which the execution body is a terminal. The method includes:

S201: displaying an information search interface, where a first search box is displayed in the information search interface.

In some embodiments, when posting an object, attribute information of the object may be obtained through the first search box, where the to-be-posted object may be a physical item, for example, a drug, a cosmetic, or the like; or may be a non-physical item, for example, a massage service, an XX consultation service, or the like.

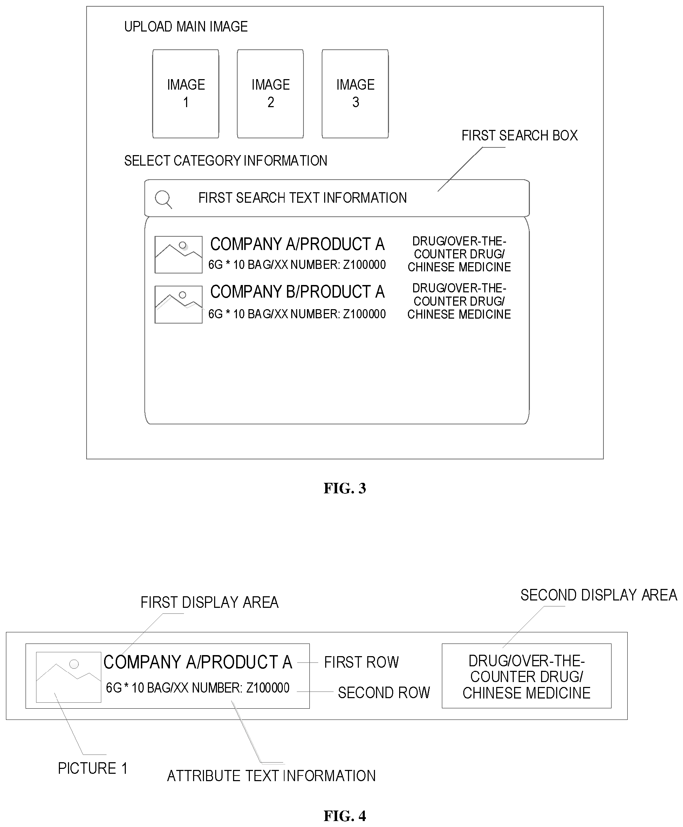

Where the information search interface may be any interface for obtaining attribute information of the object. For example, the information search interface may be an object posting interface, through which the attribute information of the object is obtained and the object is posted. The location of the first search box is not specifically limited in the present application, and may be located at the top, the middle, or the bottom of the information search interface. For example, as shown in FIG. 3, the information search interface may be an object posting interface. The first search box is displayed at a middle position of the object posting interface.

S202: displaying a first recommended search display area in the information search interface in response to first search text information input to the first search box, where first object attribute information of at least one first recommended search object corresponding to the first search text information is displayed in the first recommended search display area, and the first object attribute information of each first recommended search object includes a plurality of different types of attribute information of the first recommended search object.

In some embodiments, the first search text information may be any search information related to the object. In some embodiments, the first search text information includes attribute information of the to-be-posted object. Optionally, the first search text information may include one or more of an object brand, an object model, an object manufacturer, and an object origin. For example, the first search text information is: XX model of the XX brand mobile phone. In some other embodiments, the first search text information may further include identification information of the object. For example, drug approval number of a drug.

In some embodiments, the plurality of different types of attribute information includes basic information and category information, where the basic information is used to represent a basic attribute of the first recommended search object, and the category information is used to represent a category to which the first recommended search object belongs.

Correspondingly, the first object attribute information is displayed by means of a first object control, and the first object control includes a first display area and a second display area; where the basic information is displayed in the first display area of the first object control, the category information is displayed in the second display area of the first object control, and the first display area and the second display area are respectively located on two sides of the first object control.

For example, as shown in FIG. 4, the attribute information is displayed in the first display area of the first object control: company A/product A: 6g * 10 bag/XX number: Z100000. The category information is displayed in the second display area of the first object control: drug/over-the-counter drug/Chinese medicine.

Here, since the attribute information and the category information are displayed through a plurality of areas, the information interference between the attribute information and the category information is avoided, and the user can conveniently obtain a plurality of different types of attribute information from a plurality of display areas at a glance.

Optionally, displaying the basic information in the first display area of the first object control includes: displaying picture information of the first recommended search object in a first sub-area of the first display area, and displaying attribute text information of the first recommended search object in a second sub-area of the first display area; where the first sub-area is located adjacent to the second sub-area.

Where the basic information is used to represent a basic attribute of the first recommended search object. The base attribute may be any attribute related to the first recommended search object. Optionally, the basic information includes picture information and attribute text information of the first recommended search object; where the picture information may include a picture of the first recommended search object or a picture related to the first recommended search object. For example, the first recommended search object is XX drug, and the picture information may include a box picture of XX drug.

For example, as shown in FIG. 4, the first recommended search object includes picture information and attribute text information, where the picture information is: picture 1; attribute text information is: company A, product A; 6g * 10 bag, XX number: Z100000.

The attribute text information may include any text information related to the attribute of the first recommended search object. Optionally, the attribute text information includes first-level attribute information and second-level attribute information corresponding to the first-level attribute information; correspondingly, displaying the attribute text information of the first recommended search object in the second sub-area of the first display area includes: displaying the first-level attribute information in a first row in the second sub-area, and displaying the second-level attribute information in a second row in the second sub-area, where the second row is located below the first row.

Where the first-level attribute information may include one or more of brand information and model information. The second-level attribute information corresponding to the first-level attribute information may include one or more of configuration information, specification information, size information, and price information.

For example, as shown in FIG. 4, the first-level attribute information is: company A, product A; the second-level attribute information: 6g * 10 bag, XX number: Z100000.

It should be noted that the first-level attribute information may be highlighted, and the font size, the font color, the font type, and the like of the first-level attribute information may be set. For example, the first text information may be set as: bold font.

In some embodiments, the category information includes sub-category information of a plurality of levels, and the sub-category information of the plurality of levels has a subordinate relationship. Optionally, the category information includes a first-level category, a second-level category, and a third-level category, where the second-level category is subordinate to the first-level category, and the third-level category is subordinate to the second-level category. For example, the first-level category, the second-level category, and the third-level category are respectively: drug, over-the-counter drug, and gastrointestinal drug, where the gastrointestinal drug is subordinate to the over-the-counter drug, and the over-the-counter drug belong to is subordinate to the drug.

It should be noted that, when the category information includes a plurality of sub-category information, the category information may be displayed in the second display area of the first object control according to a preset rule. Correspondingly, displaying the category information in the second display area of the first object control includes: displaying the sub-category information of the plurality of levels in the second display area of the first object control in a descending order of subordinate relationship; or displaying the sub-category information of the plurality of levels in the second display area of the first object control in an ascending order of subordinate relationship.

For example, as shown in FIG. 4, the sub-category information of the plurality of levels is displayed in the second display area of the first object control in a descending order of subordinate relationship as: drug/over-the-counter drug/Chinese medicine.

In an embodiment, only when an account has a permission to post a certain object, the object may be posted, and different accounts may have different permissions to post objects. Optionally, before displaying the first recommended search display area in the information search interface, the method further includes: obtaining account permission information of a target account, where the target account is an account for posting a to-be-posted object; and determining, from candidate object attribute information of a plurality of candidate objects included in the account permission information, first object attribute information of at least one first recommended search object corresponding to the first search text information.

For example, the first object attribute information may be SPU information. Only when an account has permission to post a certain SPU object, the SPU object may be posted, and different accounts may have different permissions to post the SPU object. Correspondingly, before displaying the first recommended search display area in the information search interface, the method includes: obtaining account permission information of a target account, and determining at least one SPU information corresponding to the first search text information from a plurality of candidate SPU information included in the account permission information.

Here, since the first object attribute information is the information that the target account has permission to post, the validity of the displayed first object attribute information is ensured, thereby avoiding the situation that the first object attribute information cannot be obtained due to lack of permission, and avoiding the situation that the first object attribute information is repeatedly obtained, thereby further improving the information obtaining efficiency.

The embodiments of the present disclosure provide a method for displaying information, when the first search text information is input, the first object attribute information of the at least one first recommended search object can be displayed, and the first object attribute information of each first recommended search object includes a plurality of different types of attribute information of the first recommended search object. In this way, more information of the first recommended search object can be displayed, so that the user can quickly confirm the search object from the at least one first recommended search object, and therefore the information obtaining efficiency is improved.

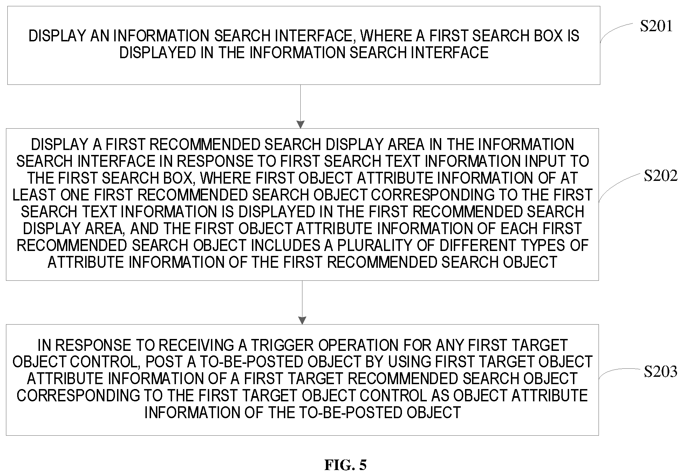

It should be noted that, in some embodiments, the object may also be posted according to the first object attribute information of the at least one first recommended search object, where the first object attribute information is displayed by means of a first object control. Correspondingly, as shown in FIG. 5, after step S202, the method further includes:

S203, in response to receiving a trigger operation for any first target object control, posting a to-be-posted object by using first target object attribute information of a first target recommended search object corresponding to the first target object control as object attribute information of the to-be-posted object.

Where the trigger operation may be any preset operation. Optionally, the trigger operation may be a click operation or a swipe operation.

Optionally, the first target object attribute information includes first target category information and first target basic information; correspondingly, the step includes: displaying an information input interface in response to receiving a trigger operation for any first target control, where a category information list and a basic information input box is displayed in the information input interface; and selecting the first target category information from a plurality of category information included in the category information list, and inputting the first target basic information into the basic information input box.

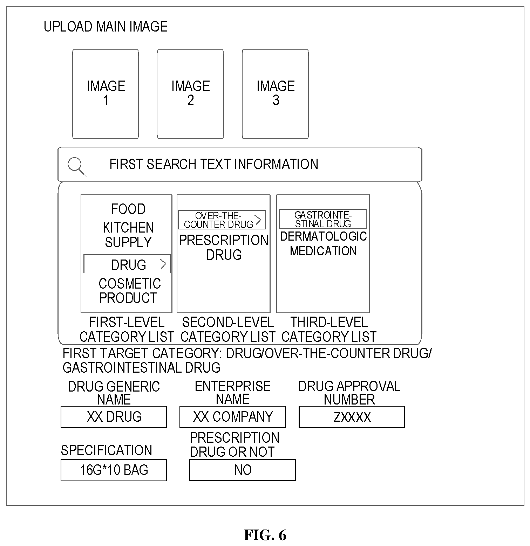

Where when there is one first target basic information and one basic information input box, the first target basic information is directly input to the basic information input box. When there are a plurality of first target basic information and a plurality of basic information input boxes, each first target basic information is input to a respective corresponding basic information input box. For example, as shown in FIG. 6, the basic information input box includes an input box of drug generic name, an input box of drug approval number, an input box of enterprise name, an input box of specification, and an input box of prescription drug or not; the first target basic information includes: a drug generic name: XX drug, a drug approval number: ZXXXX, an enterprise name: XX company, a specification: 16g* 10 bag, and prescription drug or not: NO. the "XX drug" is input to the input box of drug generic name, the "ZXXXX" is input to the input box of drug approval number, the "XX company" is input to the input box of enterprise name, the "16g*10 bag" is input to the input box of specification, and "NO" is input to the input box of prescription drug or not.

In some embodiments, the category information may include sub-category information of a plurality of levels, the category information list includes a plurality of sub-category information lists, and sub-category information of a level corresponds to a sub-category information list. Correspondingly, selecting the first target category information from the plurality of category information included in the category information list includes: for each target sub-category information in the first target category information, selecting target sub-category information from the corresponding sub-category information list.

For example, as shown in FIG. 6, the first target category information is: drug/ over-the-counter drug/Chinese medicine. The category information includes a first-level category, a second-level category, and a third-level category. The category information list includes a first-level category list, a second-level category list, and a third-level category list. If the first target category information is: drug/over-the-counter drug/Chinese medicine, then "drug" is selected from the first-level category list, "over-the-counter drug" is selected from the second-level category list, and "gastrointestinal drug" is selected from the third-level category list.

Here, since the first target category information can be automatically selected in the information input interface, and the first target basic information is input to the basic information input box, that is, automatic input of the information is realized, and therefore the posting efficiency of the object is improved.

It should be noted that, in some embodiments, if the required object attribute information cannot be obtained through the first search text information, the required object attribute information may be obtained by label and search text information.

In some embodiments, a label display area is displayed in the information search interface, the label display area is located below the first search box, and at least one label is displayed in the label display area;correspondingly, before displaying the first recommended search display area in the information search interface, the method further includes: using, in response to a selection operation for any of the at least one label, the label as a target label, and determining an object set corresponding to the target label; correspondingly, the at least one first recommended search object in the first recommended search display area is an object in the object set corresponding to the target label.

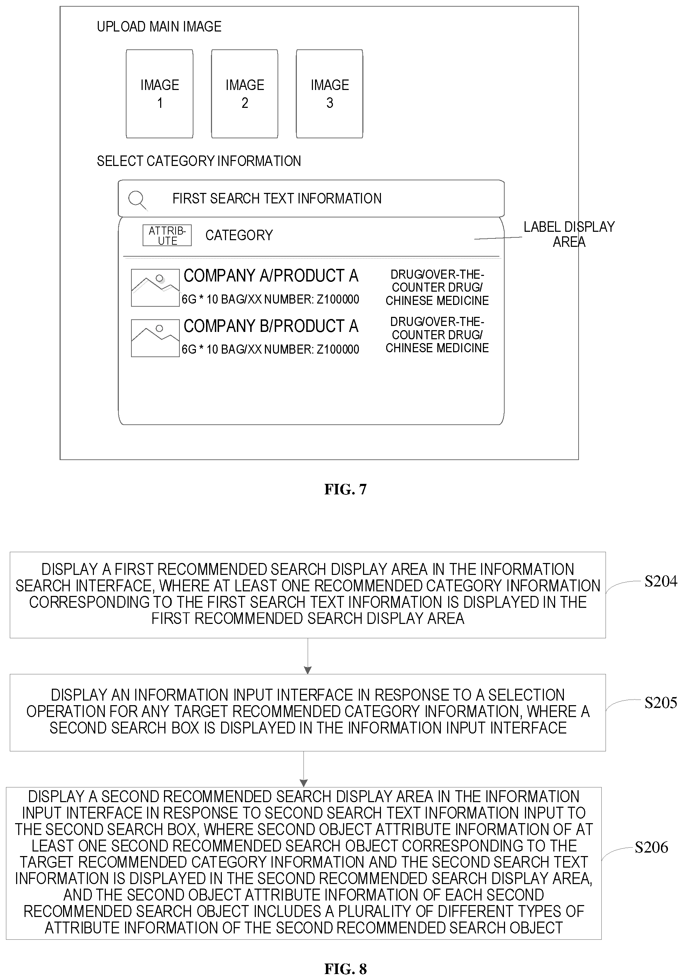

For example, as shown in FIG. 7, the at least one label in the label display area includes an attribute label and a category label, where an object set corresponding to the attribute label includes object attribute information corresponding to each of the plurality of objects, where the object set corresponding to the category label includes a plurality of category information.

Here, the label may be selected first, and then the first object attribute information of the at least one first recommended search object is obtained from the object set corresponding to the label.

In some embodiments, the at least one label includes a category label; correspondingly, as shown in FIG. 8, after in response to the first search text information input to the first search box, the method further includes:

S204: displaying a first recommended search display area in the information search interface, where at least one recommended category information corresponding to the first search text information is displayed in the first recommended search display area.

S205: displaying an information input interface in response to a selection operation for any target recommended category information, where a second search box is displayed in the display information input interface.

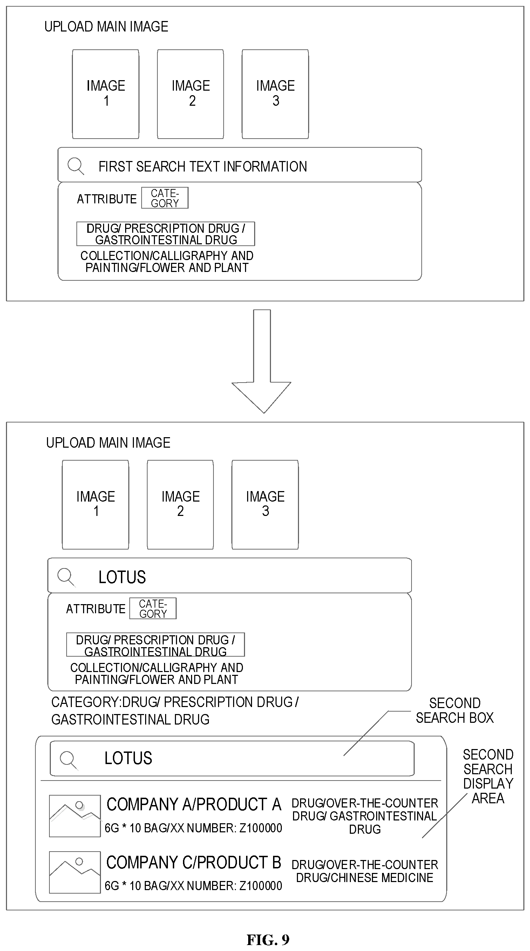

For example, as shown in FIG. 9, the target recommended category information is: drug/prescription drug/gastrointestinal drug. In response to the selection operation of the drug/prescription drug/gastrointestinal drug, the information input interface is displayed.

S206, displaying a second recommended search display area in the display information input interface in response to second search text information input to the second search box, where second object attribute information of at least one second recommended search object corresponding to the target recommended category information and the second search text information is displayed in the second recommended search display area, and the second object attribute information of each second recommended search object includes a plurality of different types of attribute information of the second recommended search object.

Optionally, the second search text information may be the same as or different from the first search text information, where the second search text information may include attribute information of a to-be-posted object. Optionally, the second search text information may include one or more of an object brand, an object model, an object manufacturer, and an object origin. For example, the second search text information is: XX model of XX brand mobile phone. Optionally, the second search text information may further include identification information of the object. For example, drug approval number of the drug.

For example, as shown in FIG. 9, the first search text information and the second search text information are the same. The first search text information is "lotus". At least one recommended category information corresponding to the first search text information includes: drug/prescription drug/gastrointestinal drug, collection/calligraphy and painting/flower and plant. In response to the selection operation of the drug/prescription drug/gastrointestinal drug, the information input interface is displayed. A second search box is displayed in the information input interface; and in response to the second search text information "lotus" input to the second search box, a second recommended search display area is displayed in the display information input interface, where the at least one second recommended search includes: product A of company A, and product B of company C.

It should be noted that, in embodiments of the present application, an object may also be posted according to the second object attribute information of the at least one second recommended search object. Correspondingly, the specific steps include: in response to receiving the trigger operation for any second target object control, posting a to-be-posted object by using second target object attribute information of the second target recommended search object corresponding to the second target object control as object attribute information of the to-be-posted object, where the target recommended category information is adjusted to category information in the second target object attribute information if the category information in the second target object attribute information is inconsistent with the target recommended category information.

For example, as shown in FIG. 9, the second target recommended search object is product A of company A, and the category information in the second target object attribute information is: drug/ over-the-counter drug/gastrointestinal drug; the target recommended category information is: drug/prescription drug/gastrointestinal drug; then the drug/over-the-counter drug/gastrointestinal drug shall prevail.

In the embodiments of the present application, referring to FIG. 7, the at least one label further includes an attribute label; in response to the selection operation for the attribute label, the information search interface is displayed.

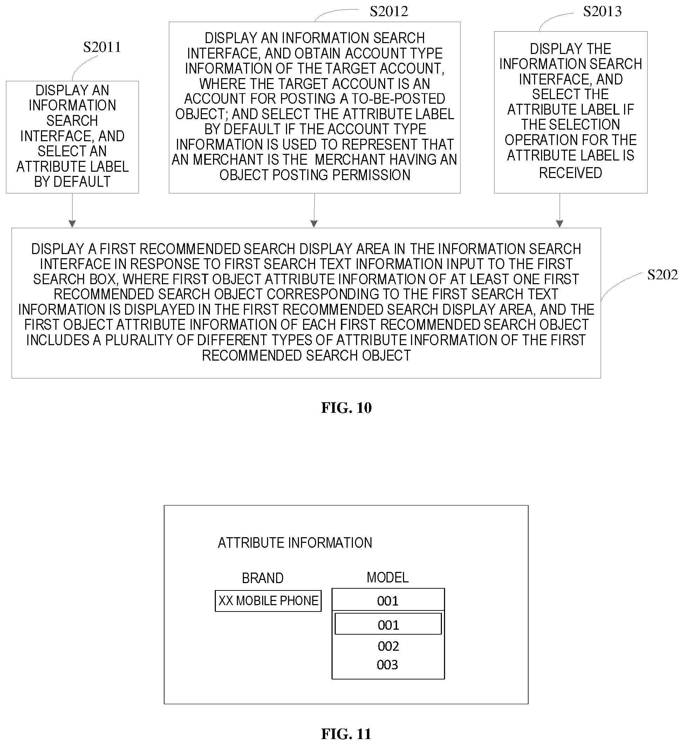

In some embodiments, as shown in FIG. 10, step S201, displaying the information search interface includes: 2011, displaying an information search interface, and selecting an attribute label by default. In some other embodiments, the step S201, displaying the information search interface includes: S2012: displaying an information search interface, and obtaining account type information of the target account, where the target account is an account for posting a to-be-posted object; and selecting the attribute label by default if the account type information is used to represent an account having an object posting permission. In some other embodiments, the step S201, displaying the information search interface includes: S2013: displaying the information search interface, and selecting the attribute label if the selection operation for the attribute label is received.

It should be noted that, if the required object attribute information cannot be obtained according to the label and the second search text information, the object attribute information may be obtained by inputting the attribute information.

Optionally, a plurality of input boxes are further displayed in the information input interface, and an input box is used to input an attribute information; the method further includes: obtaining, in response to an input instruction of any target input box, attribute information corresponding to the input instruction; for each input box other than the target input box, obtaining associated attribute information corresponding to the attribute information, and inputting the associated attribute information into the input box.

In the step, the associated attribute information corresponding to the attribute information may be one or more. When the associated attribute information is one, the associated attribute information may be automatically input to the input box. When there are a plurality of associated attribute information, information options corresponding to the plurality of associated attribute information may be displayed, and the associated attribute information corresponding to the selected information option is input to the input box.

For example, as shown in FIG. 11, for the input box of model, the associated attribute information associated with the XX phone includes: 001, 002, and 003; correspondingly, the information options corresponding to 001, 002, and 003 are displayed, and the associated attribute information corresponding to the selected information option (i.e., 001) is input to the input box.

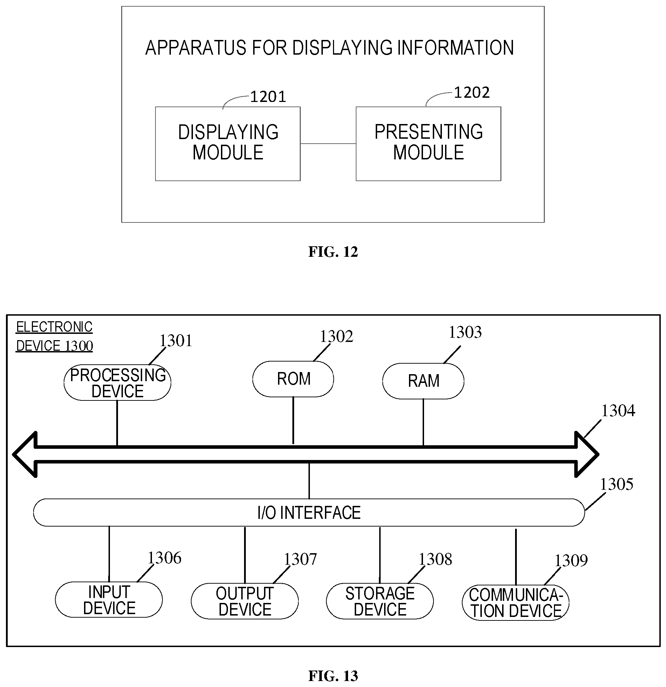

FIG. 12 is a structural block diagram of an apparatus for displaying information according to an embodiment of the present disclosure. Referring to FIG. 12, the apparatus includes a displaying module 1201 and a presenting module 1202.

The displaying module 1201 is configured to display an information search interface, where a first search box is displayed in the information search interface;
the presenting module 1202 is configured to display a first recommended search display area in the information search interface in response to first search text information input to the first search box,
where first object attribute information of at least one first recommended search object corresponding to the first search text information is displayed in the first recommended search display area, and the first object attribute information of each first recommended search object includes a plurality of different types of attribute information of the first recommended search object.

In an embodiment of the present disclosure, the plurality of different types of attribute information includes basic information and category information, where the basic information is used to represent a basic attribute of the first recommended search object, and the category information is used to represent a category to which the first recommended search object belongs; correspondingly, the presenting module 1202 is configured to display the first object attribute information by means of a first object control, and the first object control includes a first display area and a second display area; where the basic information is displayed in the first display area of the first object control, the category information is displayed in the second display area of the first object control, and the first display area and the second display area are respectively located on two sides of the first object control.

In an embodiment of the present disclosure, the basic information includes picture information and attribute text information of the first recommended search object; correspondingly, the presenting module 1202 is configured to display the basic information in the first display area of the first object control, specifically including: displaying picture information of the first recommended search object in a first sub-area of the first display area, and displaying attribute text information of the first recommended search object in a second sub-area of the first display area; where the first sub-area is located adjacent to the second sub-area..

In an embodiment of the present disclosure, the attribute text information includes first-level attribute information and second-level attribute information corresponding to the first-level attribute information; correspondingly, the presenting module 1202 is configured to display the attribute text information of the first recommended search object in the second sub-area of the first display area, including: displaying the first-level attribute information in a first row in the second sub-area, and displaying the second-level attribute information in a second row in the second sub-area, where the second row is located below the first row; and/or the category information includes sub-category information of a plurality of levels, and the sub-category information of the plurality of levels has a subordinate relationship; correspondingly, displaying the category information in the second display area of the first object control includes: displaying the sub-category information of the plurality of levels in the second display area of the first object control in a descending order of subordinate relationship; or displaying the sub-category information of the plurality of levels in the second display area of the first object control in an ascending order of subordinate relationship.

In an embodiment of the present disclosure, the method further includes: an obtaining module configured to: obtain account permission information of a target account, where the target account is an account for posting a to-be-posted object; and determine, from candidate object attribute information of a plurality of candidate objects included in the account permission information, first object attribute information of at least one first recommended search object corresponding to the first search text information.

In an embodiment of the present disclosure, the first object attribute information is displayed by means of a first object control; correspondingly, the apparatus further includes: a posting module configured to: in response to receiving a trigger operation for any first target object control, post a to-be-posted object by using first target object attribute information of a first target recommended search object corresponding to the first target object control as object attribute information of the to-be-posted object.

In an embodiment of the present disclosure, the first target object attribute information includes first target category information and first target basic information; correspondingly, the posting module is configured to: in response to receiving the trigger operation for any first target object control, post the to-be-posted object by using the first target object attribute information of the first target recommended search object corresponding to the first target object control as the object attribute information of the to-be-posted object, specifically including: displaying an information input interface in response to receiving a trigger operation for any first target control, where a category information list and a basic information input box is displayed in the information input interface; and selecting the first target category information from a plurality of category information included in the category information list, and inputting the first target basic information into the basic information input box.

In an embodiment of the present disclosure, a label display area is displayed in the information search interface, the label display area is located below the first search box, and at least one label is displayed in the label display area; correspondingly, the apparatus further includes a determining module, where the determining module is configured to use, in response to a selection operation for any of the at least one label, the label as a target label, and determine an object set corresponding to the target label; correspondingly, the at least one first recommended search object in the first recommended search display area is an object in the object set corresponding to the target label.

In an embodiment of the present disclosure, the at least one label includes a category label; correspondingly, the presenting module 1202 is further configured to: display a first recommended search display area in the information search interface, where at least one recommended category information corresponding to the first search text information is displayed in the first recommended search display area; display an information input interface in response to a selection operation for any target recommended category information, where a second search box is displayed in the display information input interface; and display a second recommended search display area in the display information input interface in response to second search text information input to the second search box, where second object attribute information of at least one second recommended search object corresponding to the target recommended category information and the second search text information is displayed in the second recommended search display area, and the second object attribute information of each second recommended search object includes a plurality of different types of attribute information of the second recommended search object.

In an embodiment of the present disclosure, the posting module is further configured to: in response to receiving the trigger operation for any second target object control, post a to-be-posted object by using second target object attribute information of a second target recommended search object corresponding to the second target object control as object attribute information of the to-be-posted object, where the target recommended category information is adjusted to category information in the second target object attribute information if the category information in the second target object attribute information is inconsistent with the target recommended category information.

An embodiment of the present disclosure provides a computer-readable storage medium storing computer-executable instructions that, when executed by a processor, implement the method for displaying information according to any of the foregoing embodiments.

FIG. 13 shows a schematic structural diagram of an electronic device 1300 suitable for implementing embodiments of the present disclosure, and the electronic device 1300 may be a terminal device or a server. The terminal device may include, but is not limited to, a mobile terminal such as a mobile phone, a notebook computer, a digital broadcast receiver, a personal digital assistant (PDA), a portable android device (PAD), a portable media player (PMP), an in-vehicle terminal (for example, an in-vehicle navigation terminal), and a fixed terminal such as a digital TV, a desktop computer, or the like. The electronic device shown in FIG. 13 is merely an example, and should not impose any limitation on the functions and scope of use of the embodiments of the present disclosure.

As shown in FIG. 13, the electronic device 1300 may include a processing device (for example, a central processing unit, a graphics processor, etc. ) 1301, which may perform various appropriate actions and processing according to a program stored in a read only memory (ROM) 1302 or a program loaded into a random access memory (RAM) 1303 from a storage device 1308. In the RAM 1303, various programs and data required by the operation of the electronic device 1300 are also stored. The processing device 1301, the ROM 1302, and the RAM 1303 are connected to each other through a bus 1304. Input/output (I/O) interface 1305 is also connected to bus 1304.

Generally, the following devices may be connected to the I/O interface 1305: an input device 1306 including, for example, a touch screen, a touch pad, a keyboard, a mouse, a camera, a microphone, an accelerometer, a gyroscope, etc.; an output device 1307 including, for example, a liquid crystal display (LCD), a speaker, a vibrator, etc.; a storage device 1308 including, for example, a magnetic tape, a hard disk, etc.; and a communication device 1309. The communication device 1309 may allow the electronic device 1300 to communicate wirelessly or wired with other devices to exchange data. While FIG. 13 shows an electronic device 1300 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication device 1309, or installed from the storage device 1308, or from the ROM 1302. When the computer program is executed by the processing apparatus 1301, the foregoing functions defined in the method of the embodiments of the present disclosure are performed.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer-readable program code is carried. Such propagated data signals may take a variety of forms including, but not limited to, electromagnetic signals, optical signals, or any suitable combination of the foregoing. The computer-readable signal medium may also be any computer-readable medium other than a computer-readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C++, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, a method for displaying information is provided according to one or more embodiments of the present disclosure, including:
displaying an information search interface, where a first search box is displayed in the information search interface; and
displaying a first recommended search display area in the information search interface in response to first search text information input to the first search box,
where first object attribute information of at least one first recommended search object corresponding to the first search text information is displayed in the first recommended search display area, and the first object attribute information of each first recommended search object includes a plurality of different types of attribute information of the first recommended search object.

According to one or more embodiments of the present disclosure, the plurality of different types of attribute information includes basic information and category information, where the basic information is used to represent a basic attribute of the first recommended search object, and the category information is used to represent a category to which the first recommended search object belongs;
correspondingly, the first object attribute information is displayed by means of a first object control, and the first object control includes a first display area and a second display area; where the basic information is displayed in the first display area of the first object control, the category information is displayed in the second display area of the first object control, and the first display area and the second display area are respectively located on two sides of the first object control.

According to one or more embodiments of the present disclosure, the basic information includes picture information and attribute text information of the first recommended search object; correspondingly, where displaying the basic information in the first display area of the first object control includes: displaying picture information of the first recommended search object in a first sub-area of the first display area, and displaying attribute text information of the first recommended search object in a second sub-area of the first display area; where the first sub-area is located adjacent to the second sub-area.

According to one or more embodiments of the present disclosure, the attribute text information includes first-level attribute information and second-level attribute information corresponding to the first-level attribute information; correspondingly, displaying the attribute text information of the first recommended search object in the second sub-area of the first display area includes: displaying the first-level attribute information in a first row in the second sub-area, and displaying the second-level attribute information in a second row in the second sub-area, where the second row is located below the first row; and/or the category information includes sub-category information of a plurality of levels, and the sub-category information of the plurality of levels has a subordinate relationship; correspondingly, displaying the category information in the second display area of the first object control includes: displaying the sub-category information of the plurality of levels in the second display area of the first object control in a descending order of subordinate relationship; or displaying the sub-category information of the plurality of levels in the second display area of the first object control in an ascending order of subordinate relationship.

According to one or more embodiments of the present disclosure, before displaying the first recommended search display area in the information search interface, the method further includes: obtaining account permission information of a target account, where the target account is an account for posting a to-be-posted object; and determining, from candidate object attribute information of a plurality of candidate objects included in the account permission information, first object attribute information of at least one first recommended search object corresponding to the first search text information.

According to one or more embodiments of the present disclosure, the first object attribute information is displayed by means of a first object control; correspondingly, the method further includes: in response to receiving a trigger operation for any first target object control,posting a to-be-posted object by using first target object attribute information of a first target recommended search object corresponding to the first target object control as object attribute information of the to-be-posted object.

According to one or more embodiments of the present disclosure, the first target object attribute information includes first target category information and first target basic information; correspondingly, in response to receiving the trigger operation for any first target object control, posting the to-be-posted object by using the first target object attribute information of the first target recommended search object corresponding to the first target object control as the object attribute information of the to-be-posted object includes: displaying an information input interface in response to receiving a trigger operation for any first target control, where a category information list and a basic information input box is displayed in the information input interface; and selecting the first target category information from a plurality of category information included in the category information list, and inputting the first target basic information into the basic information input box.

According to one or more embodiments of the present disclosure, a label display area is displayed in the information search interface, the label display area is located below the first search box, and at least one label is displayed in the label display area; correspondingly, before displaying the first recommended search display area in the information search interface, the method further includes: using, in response to a selection operation for any of the at least one label, the label as a target label, and determining an object set corresponding to the target label; correspondingly, the at least one first recommended search object in the first recommended search display area is an object in the object set corresponding to the target label.

According to one or more embodiments of the present disclosure, the at least one label includes a category label; correspondingly, after in response to the first search text information input to the first search box, the method further includes: displaying a first recommended search display area in the information search interface, where at least one recommended category information corresponding to the first search text information is displayed in the first recommended search display area; displaying an information input interface in response to a selection operation for any target recommended category information, where a second search box is displayed in the display information input interface; and displaying a second recommended search display area in the display information input interface in response to second search text information input to the second search box, where second object attribute information of at least one second recommended search object corresponding to the target recommended category information and the second search text information is displayed in the second recommended search display area, and the second object attribute information of each second recommended search object includes a plurality of different types of attribute information of the second recommended search object.

According to one or more embodiments of the present disclosure, further including: in response to receiving the trigger operation for any second target object control, posting a to-be-posted object by using second target object attribute information of a second target recommended search object corresponding to the second target object control as object attribute information of the to-be-posted object, where the target recommended category information is adjusted to category information in the second target object attribute information if the category information in the second target object attribute information is inconsistent with the target recommended category information.

According to a second aspect, an apparatus for displaying information is provided according to one or more embodiments of the present disclosure, including:
a displaying module configured to display an information search interface, where a first search box is displayed in the information search interface; and
a presenting module configured to display a first recommended search display area in the information search interface in response to first search text information input to the first search box,
where first object attribute information of at least one first recommended search object corresponding to the first search text information is displayed in the first recommended search display area, and the first object attribute information of each first recommended search object includes a plurality of different types of attribute information of the first recommended search object.

According to one or more embodiments of the present disclosure, the plurality of different types of attribute information includes basic information and category information, where the basic information is used to represent a basic attribute of the first recommended search object, and the category information is used to represent a category to which the first recommended search object belongs; correspondingly, the presenting module is configured to display the first object attribute information by means of a first object control, and the first object control includes a first display area and a second display area; where the basic information is displayed in the first display area of the first object control, the category information is displayed in the second display area of the first object control, and the first display area and the second display area are respectively located on two sides of the first object control.

According to one or more embodiments of the present disclosure, the basic information includes picture information and attribute text information of the first recommended search object; correspondingly, the presenting module is configured to display the basic information in the first display area of the first object control, specifically including: displaying picture information of the first recommended search object in a first sub-area of the first display area, and displaying attribute text information of the first recommended search object in a second sub-area of the first display area; where the first sub-area is located adjacent to the second sub-area..

According to one or more embodiments of the present disclosure, the attribute text information includes first-level attribute information and second-level attribute information corresponding to the first-level attribute information; correspondingly, the presenting module is configured to display the attribute text information of the first recommended search object in the second sub-area of the first display area, including: displaying the first-level attribute information in a first row in the second sub-area, and displaying the second-level attribute information in a second row in the second sub-area, where the second row is located below the first row; and/or the category information includes sub-category information of a plurality of levels, and the sub-category information of the plurality of levels has a subordinate relationship; correspondingly, displaying the category information in the second display area of the first object control includes: displaying the sub-category information of the plurality of levels in the second display area of the first object control in a descending order of subordinate relationship; or displaying the sub-category information of the plurality of levels in the second display area of the first object control in an ascending order of subordinate relationship.

According to one or more embodiments of the present disclosure, the method further includes: an obtaining module configured to: obtain account permission information of a target account, where the target account is an account for posting a to-be-posted object; and determine, from candidate object attribute information of a plurality of candidate objects included in the account permission information, first object attribute information of at least one first recommended search object corresponding to the first search text information.

According to one or more embodiments of the present disclosure, the first object attribute information is displayed by means of a first object control; correspondingly, the apparatus further includes: a posting module configured to: in response to receiving a trigger operation for any first target object control, post a to-be-posted object by using first target object attribute information of a first target recommended search object corresponding to the first target object control as object attribute information of the to-be-posted object.

According to one or more embodiments of the present disclosure, the first target object attribute information includes first target category information and first target basic information; correspondingly, the posting module is configured to: in response to receiving the trigger operation for any first target object control, post the to-be-posted object by using the first target object attribute information of the first target recommended search object corresponding to the first target object control as the object attribute information of the to-be-posted object, specifically including: displaying an information input interface in response to receiving a trigger operation for any first target control, where a category information list and a basic information input box is displayed in the information input interface; and selecting the first target category information from a plurality of category information included in the category information list, and inputting the first target basic information into the basic information input box.

According to one or more embodiments of the present disclosure, a label display area is displayed in the information search interface, the label display area is located below the first search box, and at least one label is displayed in the label display area; correspondingly, the apparatus further includes a determining module, where the determining module is configured to use, in response to a selection operation for any of the at least one label, the label as a target label, and determine an object set corresponding to the target label; correspondingly, the at least one first recommended search object in the first recommended search display area is an object in the object set corresponding to the target label.

According to one or more embodiments of the present disclosure, the at least one label includes a category label; correspondingly, the presenting module is further configured to: display a first recommended search display area in the information search interface, where at least one recommended category information corresponding to the first search text information is displayed in the first recommended search display area; display an information input interface in response to a selection operation for any target recommended category information, where a second search box is displayed in the display information input interface; and display a second recommended search display area in the display information input interface in response to second search text information input to the second search box, where second object attribute information of at least one second recommended search object corresponding to the target recommended category information and the second search text information is displayed in the second recommended search display area, and the second object attribute information of each second recommended search object includes a plurality of different types of attribute information of the second recommended search object.

According to one or more embodiments of the present disclosure, the posting module is further configured to: in response to receiving the trigger operation for any second target object control, post a to-be-posted object by using second target object attribute information of a second target recommended search object corresponding to the second target object control as object attribute information of the to-be-posted object, where the target recommended category information is adjusted to category information in the second target object attribute information if the category information in the second target object attribute information is inconsistent with the target recommended category information.

According to a third aspect, an electronic device is provided according to one or more embodiments of the present disclosure, including: a processor, and a memory communicatively connected to the processor;
the memory storing computer-executable instructions;
the processor executes the computer-executable instructions stored in the memory to implement the method for displaying information according to the first aspect and various possible designs of the first aspect.

According to a fourth aspect, a computer-readable storage medium is provided according to one or more embodiments of the present disclosure, the computer-readable storage medium storing computer-executable instructions, which when executed by a processor, implement the method for displaying information according to the first aspect and various possible designs of the first aspect.

According to a fifth aspect, an embodiment of the present disclosure provides a computer program product including a computer program that,when executed by a processor, implements the method for displaying information according to the first aspect and various possible designs of the first aspect.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for displaying information, comprising:
displaying an information search interface, wherein a first search box is displayed in the information search interface; and
displaying a first recommended search display area in the information search interface in response to first search text information input to the first search box,
wherein first object attribute information of at least one first recommended search object corresponding to the first search text information is displayed in the first recommended search display area, and the first object attribute information of each first recommended search object comprises a plurality of different types of attribute information of the first recommended search object.

2. The method according to claim 1, wherein the plurality of different types of attribute information comprises basic information and category information, wherein the basic information is used to represent a basic attribute of the first recommended search object, and the category information is used to represent a category to which the first recommended search object belongs;
correspondingly, the first object attribute information is displayed by means of a first object control, and the first object control comprises a first display area and a second display area;
wherein the basic information is displayed in the first display area of the first object control, the category information is displayed in the second display area of the first object control, and the first display area and the second display area are respectively located on two sides of the first object control.

3. The method according to claim 2, wherein the basic information comprises picture information and attribute text information of the first recommended search object;
correspondingly, wherein displaying the basic information in the first display area of the first object control comprises:
displaying picture information of the first recommended search object in a first sub-area of the first display area, and displaying attribute text information of the first recommended search object in a second sub-area of the first display area,
wherein the first sub-area is located adjacent to the second sub-area.

4. The method according to claim 3, wherein:
the attribute text information comprises first-level attribute information and second-level attribute information corresponding to the first-level attribute information; correspondingly, displaying the attribute text information of the first recommended search object in the second sub-area of the first display area comprises: displaying the first-level attribute information in a first row in the second sub-area, and displaying the second-level attribute information in a second row in the second sub-area, wherein the second row is located below the first row; and/or
the category information comprises sub-category information of a plurality of levels, and the sub-category information of the plurality of levels has a subordinate relationship; correspondingly, displaying the category information in the second display area of the first object control comprises: displaying the sub-category information of the plurality of levels in the second display area of the first object control in a descending order of subordinate relationship; or displaying the sub-category information of the plurality of levels in the second display area of the first object control in an ascending order of subordinate relationship.

5. The method according to claim 1, wherein before displaying the first recommended search display area in the information search interface, the method further comprises:
obtaining account permission information of a target account, wherein the target account is an account for posting a to-be-posted object; and
determining, from candidate object attribute information of a plurality of candidate objects comprised in the account permission information, first object attribute information of at least one first recommended search object corresponding to the first search text information.

6. The method according to claim 1, wherein the first object attribute information is displayed by means of a first object control; correspondingly, the method further comprises:
in response to receiving a trigger operation for any first target object control, posting a to-be-posted object by using first target object attribute information of a first target recommended search object corresponding to the first target object control as object attribute information of the to-be-posted object.

7. The method according to claim 6, wherein the first target object attribute information comprises first target category information and first target basic information;
correspondingly, in response to receiving the trigger operation for any first target object control, posting the to-be-posted object by using the first target object attribute information of the first target recommended search object corresponding to the first target object control as the object attribute information of the to-be-posted object comprises:
displaying an information input interface in response to receiving a trigger operation for any first target control, wherein a category information list and a basic information input box is displayed in the information input interface; and
selecting the first target category information from a plurality of category information comprised in the category information list, and inputting the first target basic information into the basic information input box.

8. The method according to claim 1, wherein a label display area is displayed in the information search interface, the label display area is located below the first search box, and at least one label is displayed in the label display area;
correspondingly, before displaying the first recommended search display area in the information search interface, the method further comprises:
using, in response to a selection operation for any of the at least one label, the label as a target label, and determining an object set corresponding to the target label;
correspondingly, the at least one first recommended search object in the first recommended search display area is an object in the object set corresponding to the target label.

9. The method according to claim 8, wherein the at least one label comprises a category label;
correspondingly, after in response to the first search text information input to the first search box, the method further comprises:
displaying a first recommended search display area in the information search interface, wherein at least one recommended category information corresponding to the first search text information is displayed in the first recommended search display area;
displaying an information input interface in response to a selection operation for any target recommended category information, wherein a second search box is displayed in the display information input interface; and
displaying a second recommended search display area in the display information input interface in response to second search text information input to the second search box, wherein second object attribute information of at least one second recommended search object corresponding to the target recommended category information and the second search text information is displayed in the second recommended search display area, and the second object attribute information of each second recommended search object comprises a plurality of different types of attribute information of the second recommended search object.

10. The method according to claim 9, further comprising:
in response to receiving the trigger operation for any second target object control, posting a to-be-posted object by using second target object attribute information of a second target recommended search object corresponding to the second target object control as object attribute information of the to-be-posted object, wherein the target recommended category information is adjusted to category information in second target object attribute information if the category information in the second target object attribute information is inconsistent with the target recommended category information.

11. An apparatus for displaying information, comprising:
a displaying module configured to display an information search interface, wherein a first search box is displayed in the information search interface; and
a presenting module configured to display a first recommended search display area in the information search interface in response to first search text information input to the first search box,
wherein first object attribute information of at least one first recommended search object corresponding to the first search text information is displayed in the first recommended search display area, and the first object attribute information of each first recommended search object comprises a plurality of different types of attribute information of the first recommended search object.

12. An electronic device, comprising: a processor, and a memory communicatively connected to the processor;
the memory storing computer-executable instructions;
the processor executes the computer-executable instructions stored in the memory to implement the method for displaying information according to any of claims 1 to 10.

13. A computer-readable storage medium storing computer-executable instructions that, when executed by a processor, implement the method for displaying information according to any of claims 1 to 10.

14. A computer program product comprising a computer program that,when executed by a processor, implements the method for displaying information according to any of claims 1 to 10.
